(19) Europäisches Patentamt
European Patent Office
Office européen des brevets

(11) EP 3 550 657 B1

(12) EUROPEAN PATENT SPECIFICATION

(45) Date of publication and mention of the grant of the patent:
**28.06.2023 Bulletin 2023/26**

(21) Application number: **17876629.1**

(22) Date of filing: **20.07.2017**

(51) International Patent Classification (IPC):
***H01M 10/0567*** (2010.01) ***H01M 10/0568*** (2010.01)
***H01M 10/0569*** (2010.01) ***H01M 10/0525*** (2010.01)

(52) Cooperative Patent Classification (CPC):
**H01M 10/0569; H01M 10/0525; H01M 10/0567; H01M 10/0568;** H01M 2300/0025; Y02E 60/10

(86) International application number:
**PCT/CN2017/093745**

(87) International publication number:
**WO 2018/099097 (07.06.2018 Gazette 2018/23)**

# (54) ELECTROLYTE AND SECONDARY LITHIUM BATTERY

ELEKTROLYT UND LITHIUMSEKUNDÄRBATTERIE

ÉLECTROLYTE ET BATTERIE SECONDAIRE AU LITHIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2016 CN 201611073063**

(43) Date of publication of application:
**09.10.2019 Bulletin 2019/41**

(73) Proprietor: **Contemporary Amperex Technology Co., Limited**
**Ningde, Fujian 352100 (CN)**

(72) Inventors:
- **ZHANG, Ming**
**Ningde**
**Fujian 352100 (CN)**
- **HAN, Changlong**
**Ningde**
**Fujian 352100 (CN)**
- **ZHANG, Cui**
**Ningde**
**Fujian 352100 (CN)**
- **ZHOU, Xiaochong**
**Ningde**
**Fujian 352100 (CN)**
- **JU, Feng**
**Ningde**
**Fujian 352100 (CN)**

(74) Representative: **Gong, Jinping**
**CocreateIP**
**Eggenfeldenerstraße 56**
**81929 München (DE)**

(56) References cited:
**CN-A- 103 259 040**
**CN-A- 104 051 784**
**CN-A- 104 445 133**
**CN-A- 105 206 875**
**CN-A- 105 206 875**
**CN-A- 105 800 582**
**JP-A- H1 167 270**
**US-A1- 2015 288 033**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### FIELD OF THE PRESENT INVENTION

The present invention relates to the field of battery technology, and more specifically relates to an electrolyte and a secondary lithium battery.

### BACKGROUND OF THE PRESENT INVENTION

High energy density, long cycle life, wide range of operating temperature and green environmental protection of a lithium-ion secondary battery have made it become the main energy source of mobile electronic devices at present. In terms of user experience, people are demanding higher and higher requirements for charge and discharge rate, that is to say, the lithium-ion secondary battery needs to have large rate charge and discharge capability; in addition, they also propose higher demands on its environmental adaptability, because current electronic products sometimes need to be used under extreme conditions, such as very high temperature or very low temperature environment, in general, performance of the lithium-ion secondary battery is significantly deteriorated under extreme conditions compared to normal environment.

As an important part of the lithium-ion secondary battery, an electrolyte has great effect on charge and discharge rate performances, high and low temperature performances of the lithium-ion secondary battery. However, in general, it is contradictory to improve charge and discharge rate performances, low temperature discharge performance and high temperature performance of the lithium-ion secondary battery on basis of the electrolyte. On one hand, high temperature performance can be improved by adding a film forming additive to passivate interfaces of the positive electrode plate and negative electrode plate, but because interface resistances of the positive electrode plate and negative electrode plate are increased at the same time, charge and discharge rate performances and low temperature discharge performance of the lithium-ion secondary battery are significantly adversely affected. On the other hand, by optimizing constitute of an organic solvent to reduce viscosity of the electrolyte under low temperature and to improve conductivity, for example, by adding a large amount of low viscosity organic solvent, charge and discharge rate performances and low temperature discharge performance of the lithium-ion secondary battery can be improved, but high temperature performance of the lithium-ion secondary battery normally becomes poor, and the problems of the lithium-ion secondary battery in application cannot be solved perfectly.

The US patent application No. US2015/288033A1, filed on February 24, 2015 discloses a rechargeable lithium battery including a positive electrode including a positive active material, a negative electrode and an electrolyte including a lithium salt, an organic solvent and an additive. The positive active material includes a compound represented by Chemical Formula 1, and the additive includes about 0.5 to about 2 parts by weight of lithium difluorophosphate ($LiPO_2F_2$) and about 0.5 to about 3 parts by weight of vinylene carbonate, based on 100 parts by weight of theorganic solvent.

The Chinese patent application No. CN105206875A, filed on October 29, 2015 discloses an electrolyte for improving cycle performance of anode materials of lithium-ion batteries. The electrolyte comprises an organic solvent, lithium salt and an additive, wherein the additive is TTFEB (tri-(2,2,2-trifluoroethyl)borate), and the organic solvent comprises cyclic carbonate and linear carbonate. The added additive, namely, the TTFEB, of the electrolyte facilitates formation of stable SEI films on anode surfaces, prevents co-embedment of solvent molecules, and inhibits further reactions of anodes and the electrolyte. Meanwhile, through addition of the TTFEB, the composition of the SEI films can be improved, inert components such as LiF, $Li_2O$, $Li_2O_2$ and the like are promoted, film impedance is reduced, polarization is reduced, and consumption of the lithium-ions is reduced. The TTFEB has an improving effect on the SEI films of the anodes, so that the electrolyte containing the TTFEB can effectively improve the cycle performance of the anode materials, the charging and discharging efficiency and the rate capability.

### SUMMARY OF THE PRESENT INVENTION

In view of the problems existing in the background, an object of the present invention is to provide an electrolyte and a secondary lithium battery, when the electrolyte is applied to the secondary lithium battery, the secondary lithium battery can have excellent high temperature cycle performance, high temperature storage performance, low temperature discharge performance and large rate charging performance at the same time, and low temperature lithium precipitation of the secondary lithium battery can be significantly inhibited.

In order to achieve the above object, in one aspect of the present invention, the present invention provides an electrolyte, which comprises a lithium salt, an organic solvent and an additive. The additive comprises fluoroborate and lithium difluorophosphate; the fluoroborate is one or more selected from a group consisting of compounds represented by formula 1;

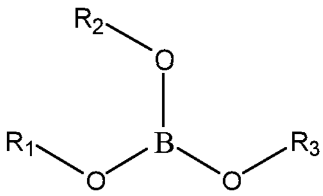

Formula 1

where, $R_1$, $R_2$ and $R_3$ each independently are one selected from a group consisting of C1-C20 alkyl group and C6-C16 aryl group, and at least one of $R_1$, $R_2$ and $R_3$ is substituted with a fluorine atom;
a content of lithium difluorophosphate is 0.1% ~ 3% of a total mass of the electrolyte; a content of fluoroborate is 0.01% ~ 5% of the total mass of the electrolyte.

In another aspect of the present invention, the present invention provides an secondary lithium battery, which comprises the electrolyte according to the one aspect of the present invention.

Compared to the technologies in the background, the present invention has the following beneficial effects: when the electrolyte of the present invention is applied to the secondary lithium battery, the secondary lithium battery can have excellent high temperature cycle performance, high temperature storage performance, low temperature discharge performance and large rate charging performance at the same time, and low temperature lithium precipitation of the secondary lithium battery can be significantly inhibited.

## DETAILED DESCRIPTION

Hereinafter an electrolyte and a secondary lithium battery according to the present invention will be described in detail.

Firstly, an electrolyte according to a first aspect of the present invention will be described.

The electrolyte according to the first aspect of the present invention comprises a lithium salt, an organic solvent and an additive. The additive comprises fluoroborate and lithium difluorophosphate ($LiPO_2F_2$); the fluoroborate is one or more selected from a group consisting of compounds represented by formula 1.

In the electrolyte according to the first aspect of the present invention, lithium difluorophosphate can improve high temperature cycle performance, high temperature storage performance and low temperature discharge performance of a secondary lithium battery, the reason is that two oxygen atoms in the structure of lithium difluorophosphate can complex with transition metal element of a positive electrode active material, the positive electrode active material will be improved in stability and will be reduced in oxidative activity to the electrolyte, so that high temperature cycle performance of the secondary lithium battery is effectively improved and volume expansion of the secondary lithium battery under high temperature is inhibited. Meanwhile, the interaction of lithium difluorophosphate and the positive electrode active material is beneficial to reduce electrochemical reaction resistance of a positive electrode plate, improve dynamics performance of the positive electrode plate and improve low temperature discharge performance of the secondary lithium battery. However, lithium difluorophosphate will reductively decompose on a negative electrode plate, a decomposition product will cover a surface of the negative electrode plate, resulting in an increase of lithium intercalation resistance of the negative electrode plate, which is not beneficial to large rate charging performance, especially when charging under low temperature environment, and the increased lithium intercalation resistance will probably cause lithium metal to precipitate on the surface of the negative electrode plate, thereby deteriorating low temperature charging performance of the secondary lithium battery. After introducing the fluoroborate into the electrolyte containing lithium difluorophosphate, a SEI film having high ionic conductivity can be formed on the surface of the negative electrode plate, which can effectively improve low temperature charging performance and large rate charging performance of the secondary lithium battery. The forming mechanism of the SEI film is explained as follows, but it is not limited thereto. The fluoroborate can preferentially reductively decompose on the surface of the negative electrode plate, which can improve stability of the SEI film and inhibit further reductive decomposition of an organic solvent. Moreover, the fluoroborate is a boron-based anion acceptor, which can combine with anion such as $F^-$, $O_2^-$, $O_2^{2-}$ and the like, promote dissolution of inert constituent such as inorganic salt, for example, LiF, $Li_2O$, $Li_2O_2$ and the like, in the SEI film, improve constitution of the SEI film, effectively reduce interface resistance of the negative electrode plate, thus improve low temperature charging performance and large rate charging performance of the secondary lithium battery.

In the electrolyte according to the first aspect of the present invention, the fluoroborate is one or more selected from a group consisting of compounds represented by formula 1. Where, $R_1$, $R_2$ and $R_3$ each independently are one selected from a group consisting of C1~C20 alkyl group and C6-C16 aryl group, and at least one of $R_1$, $R_2$ and $R_3$ is substituted with a fluorine atom.

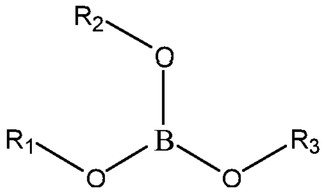

Formula 1

In the electrolyte according to the first aspect of the present invention, the C1-C20 alkyl group may be chain alkyl group or cycle alkyl group. Specifically, the C1~C20 alkyl group may be one selected from a group consisting of methyl group, ethyl group, n-propyl group, isopropyl group, cyclopropyl group, n-butyl group, isobutyl group, sec-butyl group, tert-butyl group, n-pentyl group, isopentyl group, neo-pentyl group, cyclopentyl group, n-hexyl group, isohexyl group, cyclohexyl group, heptyl group, cycloheptyl group, octyl group, cyclooctyl group, nonyl group, decyl group, undecyl group, dodecyl group, tridecyl group, tetradecyl group, pentadecyl group, hexadecyl group, heptadecyl group, octadecyl group, nonadecyl group and eicosyl group.

In the electrolyte according to the first aspect of the present invention, C6-C16 aryl group may be one selected from a group consisting of phenyl group, benzyl group, biphenylyl group, p-methylphenyl group, o-methylphenyl group, m-methylphenyl group, p-ethylphenyl group, m-ethylphenyl group, o-ethylphenyl group, 3,5-dimethylphenyl group, 2,6-dimethylphenyl group, 3,5-diethylphenyl group, 2,6-diethylphenyl group, 3,5-diisopropylphenyl, 2,6-diisopropylphenyl, 3,5-di-n-propyl phenly group, 2,6-di-n-propyl phenly group, 3,5-dibutylphenyl group, 2,6-dibutylphenyl group, 3,5-diisobutylphenyl group, 2,6-diisobutylphenyl group, 3,5-di-tert-butylphenyl group, 2,6-di-tert-butylphenyl group, triphenylmethyl group, 1-naphthyl group and 2-naphthyl group.

In the electrolyte according to the first aspect of the present invention, each of $R_1$, $R_2$ and $R_3$ is substituted with the fluorine atom.

In the electrolyte according to the first aspect of the present invention, preferably,$R_1$, $R_2$ and $R_3$ are the same.

In the electrolyte according to the first aspect of the present invention, fluoroborate is one or more selected from a group consisting of tris(2,2,2-trifluoroethyl) borate (TTFEB), tris(2,2,3,3-tetrafluoropropyl) borate (TTFPB), tris(hexafluoroisopropyl) borate (THFPB) and tris(pentafluorophenyl) borate (TPFPBA).

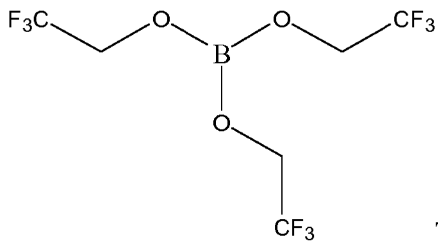

TTFEB

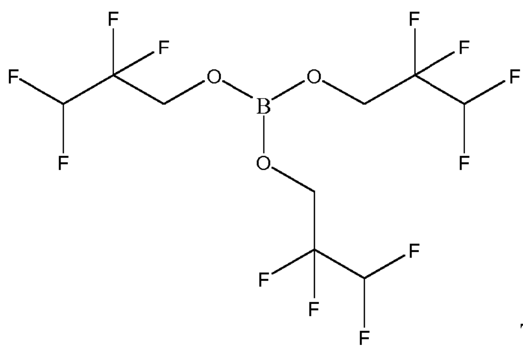

TTFPB

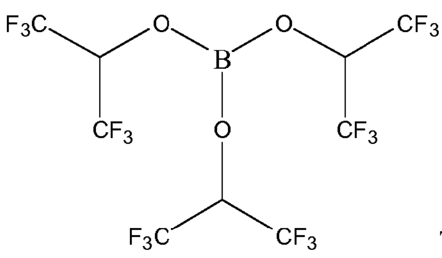

THFPB

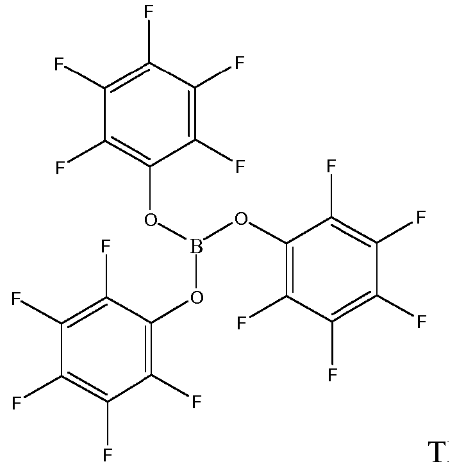

TPFPBA

In the electrolyte according to the first aspect of the present invention, a content of lithium difluorophosphate is 0.1% ~ 3% of a total mass of the electrolyte. When the content of lithium difluorophosphate is lower than 0.1% of the total mass of the electrolyte, the reaction of forming the passive film having low resistance on the surface of the positive electrode plate is insufficient, so the improvement on performance under high temperature is not obvious; when the content of lithium difluorophosphate is higher than 3% of the total mass of the electrolyte, the film formed on the surface of the negative electrode plate is too thick, and the resistance is significantly increased, which is not beneficial to improve performance of the secondary lithium battery.

In the electrolyte according to the first aspect of the present invention, a content of fluoroborate is 0.01% ~ 5% of the total mass of the electrolyte. When the content of fluoroborate is lower than 0.01% of the total mass of the electrolyte, the modification of SEI film of the negative electrode plate by fluoroborate is not obvious, it cannot effectively reduce interface resistance, and there is no obvious improvement on large rate charging performance and low temperature lithium precipitation; when the content of fluoroborate is higher than 5% of the total mass of the electrolyte, fluoroborate promotes decomposition of the lithium salt, the generated $PF_5$ will catalyze polymerization of the electrolyte, causing high temperature cycle performance and high temperature storage performance of the secondary lithium battery to be poor.

In the electrolyte according to the first aspect of the present invention, the lithium salt is one or more selected from a group consisting of $LiPF_6$, $LiBF_4$, $LiClO_4$, $LiAsF_6$, LiTFSI, LiTFS, LiFSI, LiDFOB and LiBOB.

In the electrolyte according to the first aspect of the present invention, the organic solvent is one or more selected from a group consisting of ethylene carbonate (EC), propylene carbonate (PC), dimethyl carbonate (DMC), diethyl carbonate (DEC), ethyl methyl carbonate (EMC), $\gamma$-butyrolactone (BL), methyl formate (MF), ethyl formate (EF), ethyl acetate (EA), ethyl propionate (EP), propyl propionate (PP), dimethyl sulfoxide (DMSO), tetramethylene sulfone (TMSO), methyl sulfonyl mathane (MSM) and tetrahydrofuran (THF).

Next, a secondary lithium battery according to a second aspect of the present invention is described.

The secondary lithium battery according to the second aspect of the present invention comprises the electrolyte according to the first aspect of the present invention.

In the secondary lithium battery according to the second aspect of the present invention, the secondary lithium battery further comprises a positive electrode plate, a negative electrode plate, a separator and a package case.

In the secondary lithium battery according to the second aspect of the present invention, the secondary lithium battery may be a lithium-ion secondary battery or a lithium-metal secondary battery.

In the secondary lithium battery according to the second aspect of the present invention, the positive electrode plate may comprise a positive electrode current collector and a positive electrode film, the positive electrode film is provided on the positive electrode current collector and comprises a positive electrode active material. The positive electrode active material may be selected one or more from a group consisting of lithium cobalt oxide, lithium iron phosphate, lithium manganese oxide, nickel cobalt manganese ternary material and nickel cobalt aluminum ternary material.

In the secondary lithium battery according to the second aspect of the present invention, the negative electrode plate may comprises a negative electrode current collector and a negative electrode film, the negative electrode film is provided on the negative electrode current collector and comprises a negative electrode active material. The negative electrode active material may be selected from graphite and/or silicon.

In the secondary lithium battery according to the second aspect of the present invention, the negative electrode plate may also directly use lithium metal and its alloy.

In the secondary lithium battery according to the second aspect of the present invention, the specific type of

the separator is not limited, it may be any separator material used in the prior art, such as a polyethylene film, a polypropylene film, a polyvinylidene fluoride film and a multilayer composite film thereof, but it is not limited thereto.

Hereinafter the present invention will be described in detail in combination with examples. It should be noted that, the examples described in the present invention are only used for explaining the present invention, and are not intended to limit the scope of the present invention. Pouch-type lithium-ion secondary battery is selected in the present invention to perform related tests.

In the following examples and comparative examples, the materials, reagents and instruments used are commercially available unless otherwise specified.

The lithium-ion secondary batteries of examples 1-17 and comparative examples 1-6 were prepared as follows.

(1) Preparation of a positive electrode plate: $LiNi_{0.5}Co_{0.2}Mn_{0.3}O_2$ (positive electrode active material), polyvinylidene fluoride (binder), acetylene black (conductive agent) were mixed according a mass ratio of 97:1:2, then 1-methyl-2-pyrrolidinone (NMP) was added, mixing was performed under vacuum mixer until the system became uniform and transparent, a positive electrode slurry was obtained; then the positive electrode slurry was uniformly coated on an aluminum foil (positive electrode current collector) having a thickness of 14$\mu$m; drying under room temperature was then performed, which was followed by moving the aluminum foil to an oven for baking 1h under 120°C, then after cold-pressing and slitting, the positive electrode plate was obtained.

(2) Preparation of a negative electrode plate: artificial graphite (negative electrode active material), sodium carboxymethylcellulose (thickening agent, CMC), styrene butadiene rubber latex (binder) were mixed according to a mass ratio of 98:1:1, then deionized water was added, a negative electrode slurry was obtained under vacuum mixer; then the positive electrode slurry was uniformly coated on a copper foil (negative electrode current collector) having a thickness of 8$\mu$m; after drying under room temperature, the copper foil was moved to an oven for baking 1h under 120°C, then after cold-pressing and slitting, the negative electrode plate was obtained

(3) Preparation of an electrolyte: in an argon atmosphere glove box in which the water content was less than 10ppm, EC, EMC and DEC according to a mass ratio of EC:EMC:DEC=30:50:20 were mixed as an organic solvent, then fully dried $LiPF_6$ (lithium salt) was dissolved into the mixed organic solvent, then fluoroborate and lithium difluorophosphate were added, after uniformly mixed, an electrolyte was obtained. Where, a concentration of $LiPF_6$ was 1mol/L. A specific type and content of fluoroborate and lithium difluorophosphate used in the electrolyte were shown in table 1, the added amount of fluoroborate and lithium difluorophosphate were mass percentage calculated based on the total mass of the electrolyte.

(4) Preparation of a separator: a polypropylene film with a thickness of 12$\mu$m was used as a separator.

(5) Preparation of a lithium-ion secondary battery: the positive electrode plate, the separator and the negative electrode plate were laminated in order to make the separator separate the positive electrode plate from the negative electrode plate, then were wound to form a square electrode assembly, the square electrode assembly was placed in an aluminum-plastic film, then drying was performed at 80°C to remove water, and the corresponding electrolyte was injected into the aluminum-plastic film and the aluminum-plastic film was sealed, after standing-by, hot-cold pressing, forming, clamping, capacity grading and the like, the pouch-type lithium-ion secondary battery was obtained.

Table 1 Parameters of examples 1-17 and comparative examples 1-6

| | Additive and added amount (%) | | | | |
|---|---|---|---|---|---|
| | Lithium difluorophosphate | Fluoroborate | | | |
| | | THFPB | TTFEB | TTFPB | TPFPBA |
| Example 1 | 1 | 0.05 | / | / | / |
| Example 2 | 1 | 0.5 | / | / | / |
| Example 3 | 1 | 1 | / | / | / |
| Example 4 | 1 | 3 | / | / | / |
| Example 5 | 1 | 5 | / | / | / |
| Example 6 | 0.1 | 1 | / | / | / |
| Example 7 | 0.3 | 1 | / | / | / |
| Example 8 | 0.5 | 1 | / | / | / |
| Example 9 | 2 | 1 | / | / | / |
| Example 10 | 3 | 1 | / | / | / |

(continued)

| | Additive and added amount (%) | | | | |
|---|---|---|---|---|---|
| | Lithium difluorophosphate | Fluoroborate | | | |
| | | THFPB | TTFEB | TTFPB | TPFPBA |
| Example 11 | 1 | / | 1 | / | / |
| Example 12 | 1 | / | / | 1 | / |
| Example 13 | 1 | / | / | / | 1 |
| Example 14 | 1 | 0.5 | 0.5 | / | |
| Example 15 | 1 | 0.5 | / | 0.5 | |
| Example 16 | 1 | 0.5 | / | / | 0.5 |
| Example 17 | 1 | 0.5 | 0.2 | 0.3 | |
| Comparative example 1 | / | / | / | / | |
| Comparative example 2 | 1 | / | / | / | |
| Comparative example 3 | / | 1 | / | / | |
| Comparative example 4 | 4 | 1 | / | / | |
| Comparative example 5 | 1 | 6 | / | / | |
| Comparative example 6 | 4 | 6 | / | / | |

Next, test processes of the lithium-ion secondary batteries were described.

(1) Testing of high temperature storage performance of the lithium-ion secondary battery

At 25°C, after standing-by for 30 minutes, the lithium-ion secondary battery was then charged to a voltage of 4.3V at a constant current of 1C, then the lithium-ion secondary battery was charged to a current of 0.05C at a constant voltage of 4.3V, a volume of the lithium-ion secondary battery was tested and marked as $V_0$; then the fully charged lithium-ion secondary battery was stored under 85°C in the thermostat, after storing for 10 days, drainage method was used to test the volume and the volume was marked as $V_1$.

Volume expansion rate of the lithium-ion secondary battery after stored for 10 days under 85°C (%) $= (V_1-V_0)/V_0 \times 100\%$.

(2) Testing of high temperature cycle performance of the lithium-ion secondary battery

At 45°C, after standing-by for 30 minutes, the lithium-ion secondary battery was charged to a voltage of 4.3V at a constant current of 3C, then further charged to a current of 0.05C at a constant voltage of 4.3V, after standing-by for 5 minutes, the lithium-ion secondary was discharged to a voltage of 2.8V at a constant current of 1C, this was a charge-discharge cycle, the discharging capacity of the lithium-ion secondary battery at this time was the discharging capacity after first cycle. Charge/discharge test of the lithium-ion secondary battery was performed for 500 times cycles according to the above method.

Capacity retention rate of the lithium-ion secondary battery after cycling for N times under 45°C (%) = (Discharging capacity after N times cycles / Discharging capacity after first time cycle) $\times$ 100%.

(3) Testing of large rate charging performance of the lithium-ion secondary battery

At 25°C, after standing-by for 30 minutes, the lithium-ion secondary battery was discharged to 2.8V at a constant current of 1C, after standing-by for 5 minutes, the lithium-ion secondary battery was charged to 4.3V at a constant current of 0.5C, then after standing-by for 5 minutes, the lithium-ion secondary battery was discharged to 2.8V at a constant current of 2.8V, the charging capacity charged under 0.5C was obtained.

At 25°C, after standing-by for 30 minutes, the lithium-ion secondary battery was discharged to 2.8V at a constant current of 1C, after standing-by for 5 minutes, the lithium-ion secondary battery was separately charged to 4.3V at different rates (1C, 3C, 5C), then after standing-by for 5 minutes, the lithium-ion secondary battery was discharged to 2.8V at a constant current of 1C, charging capacity charged under different rate (1C, 3C, 5C) were obtained.

Charging capacity rate of the lithium-ion secondary battery charged under different rate (%) = Charging capacity charged under different rate (1C, 3C, 5C) / Charging capacity charged under 0.5C × 100%.

(4) Testing of low temperature discharge performance of the lithium-ion secondary battery

At 25°C, after standing-by for 30 minutes, the lithium-ion secondary battery was charged to a voltage of 4.3V at a constant current of 1C, then further charged to a current of 0.05C at a constant voltage of 4.3V, after standing-by for 5 minutes, the lithium-ion secondary battery was stand-by for 4 hours respectively under different temperature (25°C, 0°C, -10°C), then the lithium-ion secondary battery was discharged to 2.8V at a constant current of 1C, after discharging, standing-by was performed for 5 minutes, discharging capacity of the lithium-ion secondary battery at this time was marked.

Discharging capacity rate of the lithium-ion secondary battery under different temperature (%) = (Discharging capacity under 0°C, -10°C) / (Discharging capacity under 25°C) × 100%.

(5) Testing of lithium precipitation performance of the negative electrode plate

At 25°C, after standing-by for 30 minutes, the lithium-ion secondary battery was charged to a voltage of 4.3V at a constant current of 5C, then further charged to a current of 0.05C at a constant voltage of 4.3V, after standing-by for 5 minutes, the lithium-ion secondary battery was discharged to a voltage of 2.8V at a constant current of 1C, this was a charge-discharge cycle, the lithium-ion secondary battery was cycled 10 times according to the above process, then the lithium-ion secondary battery was charged to a voltage of 4.3V at a constant current of 5C. In a desiccation room environment, the lithium-ion secondary battery charged to 4.3V was disassembled, and the lithium precipitated on the surface of the negative electrode plate was observed. Where, the degree of the lithium precipitation was divided into no lithium precipitation, slight lithium precipitation, moderate lithium precipitation and serious lithium precipitation. The slight lithium precipitation indicated that the area of the lithium precipitation on the surface of the negative electrode was one-tenth or less of the entire area of the surface of the negative electrode plate, serious lithium precipitation indicated that the area of the lithium precipitation on the surface of the negative electrode plate was more than one-third of the entire area of the surface of the negative electrode plate.

Table 2 Test results of examples 1-17 and comparative examples 1-6

| | Capacity rate after N times retention cycling /% for under 45°C | | | Volume expansi on rate after stored for 10 days under 85°C / % | Discharging capacity rate under different temperature /% | | Charged capacity rate charged under different rate / % | | | Lithium precipitation performance of the negative electrode plate |
|---|---|---|---|---|---|---|---|---|---|---|
| | 300 | 800 | 1500 | | 0°C | -10°C | 1C | 3C | 5C | |
| Example 1 | 95.2 | 90.1 | 83.3 | 23.5 | 93.7 | 81.9 | 97.1 | 84.3 | 71.6 | Moderate lithium precipitation |
| Example 2 | 94.8 | 89.6 | 82.3 | 24.9 | 94.0 | 81.3 | 97.6 | 88.3 | 76.2 | Slight lithium precipitation |
| Example 3 | 94.3 | 89.0 | 81.3 | 26.2 | 93.5 | 80.2 | 97.5 | 89.6 | 80.2 | No lithium precipitation |

(continued)

| | Capacity rate after N times retention cycling /% for under 45°C | | | Volume expansi on rate after stored for 10 days under 85°C / % | Discharging capacity rate under different temperature /% | | Charged capacity rate charged under different rate / % | | | Lithium precipitation performance of the negative electrode plate |
|---|---|---|---|---|---|---|---|---|---|---|
| | 300 | 800 | 1500 | | 0°C | -10°C | 1C | 3C | 5C | |
| Example 4 | 93.2 | 87.8 | 79.6 | 30.7 | 93.6 | 83.1 | 97.4 | 92.3 | 83.4 | No lithium precipitation |
| Example 5 | 90.5 | 85.4 | 75.4 | 54.4 | 93.5 | 82.4 | 96.3 | 94.5 | 85.6 | No lithium precipitation |
| Example 6 | 93.3 | 76.4 | 66.3 | 67.5 | 90.2 | 76.5 | 98.0 | 91.0 | 83.1 | No lithium precipitation |
| Example 7 | 93.5 | 80.4 | 72.7 | 45.2 | 91.5 | 80.3 | 97.9 | 90.6 | 82.5 | No lithium precipitation |
| Example 8 | 94.0 | 84.4 | 77.3 | 34.2 | 92.4 | 81.4 | 97.7 | 90.2 | 81.9 | No lithium precipitation |
| Example 9 | 93.1 | 83.4 | 72.0 | 19.4 | 88.6 | 78.4 | 96.3 | 80.5 | 73.0 | Slight lithium precipitation |
| Example 10 | 90.8 | 78.9 | 68.3 | 17.4 | 87.5 | 75.3 | 95.4 | 79.7 | 69.5 | Slight lithium precipitation |
| Example 11 | 94.6 | 91.2 | 83.4 | 28.4 | 93.2 | 78.5 | 97.5 | 91.3 | 83.2 | No lithium precipitation |
| Example 12 | 95.2 | 89.8 | 83.6 | 26.3 | 94.3 | 81.4 | 97.3 | 90.7 | 82.1 | No lithium precipitation |
| Example 13 | 95.5 | 90.1 | 84.0 | 28.4 | 95.0 | 82.4 | 98.5 | 91.4 | 84.3 | No lithium precipitation |
| Example 14 | 95.4 | 90.5 | 82.8 | 27.5 | 92.7 | 80.8 | 98.6 | 91.5 | 81.9 | No lithium precipitation |
| Example 15 | 95.3 | 91.4 | 93.2 | 30.4 | 92.5 | 78.4 | 96.5 | 92.0 | 80.6 | No lithium precipitation |
| Example 16 | 95.0 | 91.6 | 85.2 | 26.2 | 94.3 | 79.9 | 97.3 | 92.2 | 80.9 | No lithium precipitation |
| Example 17 | 94.7 | 89.8 | 81.6 | 28.2 | 94.0 | 82.4 | 97.5 | 91.4 | 82.5 | No lithium precipitation |
| Comparative example 1 | 94.2 | 75.1 | 60.3 | 83.3 | 88.6 | 70.5 | 97.7 | 86.8 | 76.9 | Slight lithium precipitation |
| Comparative example 2 | 95.3 | 90.2 | 83.4 | 23.5 | 93.4 | 80.3 | 95.4 | 83.4 | 71.2 | Serious lithium precipitation |
| Comparative example 3 | 93.1 | 70.4 | 53.2 | 90.1 | 88.1 | 73.9 | 98 | 91.3 | 83.4 | No lithium precipitation |
| Comparative example 4 | 90.1 | 74.5 | 62.3 | 15.2 | 85.2 | 75.0 | 94.2 | 76.4 | 65.2 | Serious lithium precipitation |
| Comparative example 5 | 82.4 | 73.2 | 48.9 | 65.4 | 93.5 | 81.4 | 95.3 | 93.4 | 84.6 | No lithium precipitation |
| Comparative example 6 | 89.9 | 81.3 | 57.2 | 43.5 | 84.3 | 67.4 | 94.4 | 87.5 | 80.2 | Serious lithium precipitation |

From the comparison of the comparative examples 1-2, it could be seen that when lithium difluorophosphate was added into the electrolyte, high temperature cycle performance and high temperature storage performance of the

lithium-ion secondary battery were significantly improved, and low temperature discharge performance of the lithium-ion secondary battery was improved to a large extent, but large rate charging performance and low temperature lithium precipitation of the lithium-ion secondary battery were significantly deteriorated. From the comparison of the comparative example I and comparative example 3, it could be seen that when tris(hexafluoroisopropyl) borate was added into the electrolyte, large rate charging performance and low temperature lithium precipitation of the lithium-ion secondary battery were significantly improved, but high temperature cycle performance and high temperature storage performance of the lithium-ion secondary battery were deteriorated. Lithium difluorophosphate and fluoroborate were added into the electrolyte at the same time in examples 1-17, lithium-ion secondary battery had excellent high temperature cycle performance, high temperature storage performance, low temperature discharge performance and large rate charging performance at the same time, and low temperature lithium precipitation of the lithium-ion secondary battery was significantly inhibited.

In comparative examples 4-6, that the content of fluoroborate and/or lithium difluorophosphate were/was too high all would deteriorate performances of lithium-ion secondary battery.

According to the invention of the above description, those skilled in the art may also make an appropriate change and modification to the above examples. Therefore, the present invention is not limited to the specific examples disclosed and described above, and some modifications and change to the present invention should also fall within the scope of protection of the Claims of the present invention.

## Claims

1. An electrolyte, comprising:

a lithium salt;
an organic solvent; and
an additive;
wherein,
the additive comprises fluoroborate and lithium difluorophosphate;
the fluoroborate is one or more selected from a group consisting of compounds represented by formula 1;

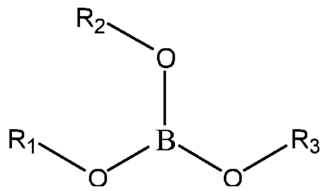
Formula 1

wherein, $R_1$, $R_2$ and $R_3$ each independently are one selected from a group consisting of C1-C20 alkyl group and C6-C16 aryl group, and at least one of $R_1$, $R_2$ and $R_3$ is substituted with a fluorine atom;
a content of lithium difluorophosphate is 0.1% ~ 3% of a total mass of the electrolyte;
a content of the fluoroborate is 0.01% ~ 5% of the total mass of the electrolyte.

2. The electrolyte according to Claim 1, wherein

the C1-C20 alkyl group is one selected from a group consisting of methyl group, ethyl group, n-propyl group, isopropyl group, cyclopropyl group, n-butyl group, isobutyl group, sec-butyl group, tert-butyl group, n-pentyl group, isopentyl group, neo-pentyl group, cyclopentyl group, n-hexyl group, isohexyl group, cyclohexyl group, heptyl group, cycloheptyl group, octyl group, cyclooctyl group, nonyl group, decyl group, undecyl group, dodecyl group, tridecyl group, tetradecyl group, pentadecyl group, hexadecyl group, heptadecyl group, octadecyl group, nonadecyl group and eicosyl group;
the C6-C16 aryl group is one selected from a group consisting of phenyl group, benzyl group, biphenylyl group, p-methylphenyl group, o-methylphenyl group, m-methylphenyl group, p-ethylphenyl group, m-ethylphenyl group, o-ethylphenyl group, 3,5-dimethylphenyl group, 2,6-dimethylphenyl group, 3,5-diethylphenyl group, 2,6-diethylphenyl group, 3,5-diisopropylphenyl, 2,6-diisopropylphenyl, 3,5-di-n-propyl phenyl group, 2,6-di-n-propyl phenyl group, 3,5-dibutylphenyl group, 2,6-dibutylphenyl group, 3,5-diisobutylphenyl group, 2,6-diisobutylphenyl group, 3,5-di-tert-butylphenyl group, 2,6-di-tert-butylphenyl group, triphenylmethyl group, 1-naphthyl group and 2-naphthyl group.

3. The electrolyte according to Claim 1, wherein at least one hydrogen atom in each of $R_1$, $R_2$ and $R_3$ is substituted with the fluorine atom.

4. The electrolyte according to Claim 1 or 3, wherein $R_1$, $R_2$ and $R_3$ are the same.

5. The electrolyte according to Claim 1 or 3, wherein fluoroborate is one or more selected from a group consisting of tris(2,2,2-trifluoroethyl) borate, tris(2,2,3,3-tetrafluoropropyl) borate, tris(hexafluoroisopropyl) borate and tris(pentafluorophenyl) borate.

6. The electrolyte according to Claim 1, wherein the lithium salt is one or more selected from a group consisting of $LiPF_6$, $LiBF_4$, $LiClO_4$, $LiAsF_6$, LiTFSI, LiTFS, LiFSI, LiDFOB and LiBOB.

7. The electrolyte according to Claim 1, wherein the organic solvent is one or more selected from a group consisting of ethylene carbonate, propylene carbonate, dimethyl carbonate, diethyl carbonate, ethyl methyl carbonate, $\gamma$-butyrolactone, methyl formate, ethyl formate, ethyl acetate, ethyl propionate, propyl propionate, dimethyl sulfoxide, tetramethylene sulfone, methyl sulfonyl methane and tetrahydrofuran.

8. A secondary lithium battery comprising the electrolyte according to any one of Claims 1 to 7.

**Patentansprüche**

1. Elektrolyt, umfassend:

ein Lithiumsalz;
ein organisches Lösungsmittel und
ein Additiv;
wobei
das Additiv Fluorborat und Lithiumdifluorphosphat umfasst;
es sich bei dem Fluorborat um ein oder mehrere Fluorborate handelt, die aus der Gruppe bestehend aus Verbindungen, die durch Formel 1 wiedergegeben werden, ausgewählt sind;

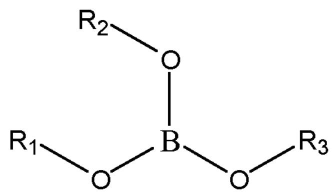
Formel 1

wobei $R_1$, $R_2$ und $R_3$ jeweils unabhängig für eine Gruppe stehen, die aus der Gruppe bestehend aus einer C1-C20-Alkylgruppe und einer C6-C16-Arylgruppe ausgewählt ist und mindestens eines von $R_1$, $R_2$ und $R_3$ durch ein Fluoratom substituiert ist;
der Gehalt an Lithiumdifluorphosphat 0,1 % ~ 3 % der Gesamtmasse des Elektrolyts beträgt;
der Gehalt des Fluoroborats 0,01 % ~ 5 % der Gesamtmasse des Elektrolyts beträgt.

2. Elektrolyt nach Anspruch 1, wobei

die C1-C20-Alkylgruppe für eine Gruppe steht, die aus der Gruppe bestehend aus einer Methylgruppe, Ethylgruppe, n-Propylgruppe, Isopropylgruppe, Cyclopropylgruppe, n-Butylgruppe, Isobutylgruppe, sec-Butylgruppe, tert-Butylgruppe, n-Pentylgruppe, Isopentylgruppe, Neopentylgruppe, Cyclopentylgruppe, n-Hexylgruppe, Isohexylgruppe, Cyclohexylgruppe, Heptylgruppe, Cycloheptylgruppe, Octylgruppe, Cyclooctylgruppe, Nonylgruppe, Decylgruppe, Undecylgruppe, Dodecylgruppe, Tridecylgruppe, Tetradecylgruppe, Pentadecylgruppe, Hexadecylgruppe, Heptadecylgruppe, Octadecylgruppe, Nonadecylgruppe und Eicosylgruppe ausgewählt ist;
die C6~C16-Arylgruppe für eine Gruppe steht, die aus der Gruppe bestehend aus einer Phenylgruppe, Benzylgruppe, Biphenylylgruppe, p-Methylphenylgruppe, o-Methylphenylgruppe, m-Methylphenylgruppe, p-Ethylphenylgruppe, mEthylphenylgruppe, o-Ethylphenylgruppe, 3,5-Dimethylphenylgruppe, 2,6-Dimethylphenylgruppe, 3,5-Diethylphenylgruppe, 2,6-Diethylphenylgruppe, 3,5-Diisopropylphenyl, 2,6-Diisopropylphenyl, 3,5-Di-n-propylphenylgruppe, 2,6-Di-n-propylphenylgruppe, 3,5-Dibutylphenylgruppe, 2,6-Dibutylphenylgruppe, 3,5-Diisobutylphenylgruppe, 2,6-Diisobutylphenylgruppe, 3,5-Di-tert-butylphenylgruppe, 2,6-Di-tert-butylphenylgruppe, Triphenylmethylgruppe, 1-Naphthylgruppe und 2-Naphthylgruppe ausgewählt ist.

**3.** Elektrolyt nach Anspruch 1, wobei mindestens ein Wasserstoffatom in jedem von $R_1$, $R_2$ und $R_3$ durch das Fluoratom substituiert ist.

**4.** Elektrolyt nach Anspruch 1 oder 3, wobei $R_1$, $R_2$ und $R_3$ gleich sind.

**5.** Elektrolyt nach Anspruch 1 oder 3, wobei es sich bei dem Fluorborat um ein oder mehrere Fluorborate handelt, die aus der Gruppe bestehend aus Tris(2,2,2-trifluorethyl)borat, Tris(2,2,3,3-tetrafluorpropyl)borat, Tris(hexafluorisopropyl)borat und Tris(pentafluorphenyl)borat ausgewählt sind.

**6.** Elektrolyt nach Anspruch 1, wobei es sich bei dem Lithiumsalz um ein oder mehrere Lithiumsalze handelt, die aus der Gruppe bestehend aus $LiPF_6$, $LiBF_4$, $LiClO_4$, $LiAsF_6$, LiTFSI, LiTFS, LiFSI, LiDFOB und LiBOB ausgewählt sind.

**7.** Elektrolyt nach Anspruch 1, wobei es sich bei dem organischen Lösungsmittel um ein oder mehrere organische Lösungsmittel handelt, die aus der Gruppe bestehend aus Ethylencarbonat, Propylencarbonat, Dimethylcarbonat, Diethylcarbonat, Ethylmethylcarbonat, γ-Butyrolacton, Ameisensäuremethylester, Ameisensäureethylester, Essigsäureethylester, Propionsäureethylester, Propionsäurepropylester, Dimethylsulfoxid, Tetramethylensulfon, Methylsulfonylmethan und Tetrahydrofuran ausgewählt sind.

**8.** Sekundäre Lithiumbatterie, die den Elektrolyt nach einem der Ansprüche 1 bis 7 umfasst.

## Revendications

**1.** Électrolyte, comprenant :

un sel de lithium ;
un solvant organique ; et
un additif ;
l'additif comprenant un fluoroborate et le difluorophosphate de lithium ;
le fluoroborate étant l'un ou plusieurs choisis dans un groupe constitué par des composés représentés par la formule 1 ;

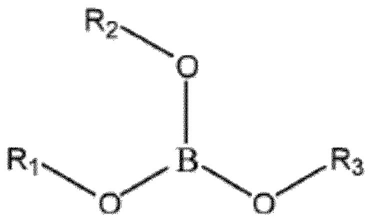

Formule 1

$R_1$, $R_2$ et $R_3$ chacun indépendamment étant l'un choisi dans un groupe constitué par un groupe alkyle en C1-C20 et un groupe aryle en C6-C16, et au moins l'un parmi $R_1$, $R_2$ et $R_3$ étant substitué par un atome de fluor ;
une teneur en difluorophosphate de lithium étant de 0,1 % à 3 % d'une masse totale de l'électrolyte ;
une teneur du fluoroborate étant de 0,01 % à 5 % de la masse totale de l'électrolyte.

**2.** Électrolyte selon la revendication 1, le groupe alkyle en C1-C20 étant l'un choisi dans un groupe constitué par un groupe méthyle, un groupe éthyle, un groupe n-propyle, un groupe isopropyle, un groupe cyclopropyle, un groupe n-butyle, un groupe isobutyle, un groupe sec-butyle, un groupe tert-butyle, un groupe n-pentyle, un groupe isopentyle, un groupe néo-pentyle, un groupe cyclopentyle, un groupe n-hexyle, un groupe iso-hexyle, un groupe cyclohexyle, un groupe heptyle, un groupe cycloheptyle, un groupe octyle, un groupe cyclooctyle, un groupe nonyle, un groupe décyle, un groupe undécyle, un groupe dodécyle, un groupe tridécyle, un groupe tétradécyle, un groupe pentadécyle, un groupe hexadécyle, un groupe heptadécyle, un groupe octadécyle, un groupe nonadécyle et un groupe eicosyle le groupe aryle en C6-C16 étant l'un choisi dans un groupe constitué par un groupe phényle, un groupe benzyle,

un groupe biphényle, un groupe p-méthylphényle, un groupe o-méthylphényle, un groupe m-méthylphényle, un groupe p-éthylphényle, un groupe méthylphényle, un groupe o-éthylphényle, un groupe 3,5-diméthylphényle, un groupe 2,6-diméthylphényle, un groupe 3,5-diéthylphényle, un groupe 2,6-diéthylphényle, un groupe 3,5-diisopropylphényle, 2,6-diisopropylphényle, 3,5-di-n-propylphényle, 2,6-di-n-propylphényle, 3,5-dibutylphényle, 2,6-dibutylphényle, 3,5-diisobutylphényle, un groupe 2,6-diisobutylphényle, un groupe 3,5-di-tert-butylphényle, un groupe 2,6-di-tert-butylphényle, un groupe triphénylméthyle, un groupe 1-naphtyle et un groupe 2-naphtyle.

**3.** Électrolyte selon la revendication 1, au moins un atome d'hydrogène dans chacun parmi $R_1$, $R_2$ et $R_3$ étant substitué par l'atome de fluor.

**4.** Électrolyte selon la revendication 1 ou 3, $R_1$, $R_2$ et $R_3$ étant les mêmes.

**5.** Électrolyte selon la revendication 1 ou 3, un fluoroborate étant l'un ou plusieurs choisis dans un groupe constitué par le tris(2,2,2-trifluoroéthyl)borate, le tris(2,2,3,3-tetrafluoropropyl)borate, le tris(hexafluoroisopropyl)borate et le tris(pentafluorophényl)borate.

**6.** Électrolyte selon la revendication 1, le sel de lithium étant l'un ou plusieurs choisis dans un groupe constitué par $LiPF_6$, $LiBF_4$, $LiClO_4$, $LiAsF_6$, LiTFSI, LiTFS, LiFSI, LiDFOB et LiBOB.

**7.** Électrolyte selon la revendication 1, le solvant organique étant l'un ou plusieurs choisis dans un groupe constitué par le carbonate d'éthylène, le carbonate de propylène, le carbonate de diméthyle, le carbonate de diéthyle, le carbonate d'éthyle et de méthyle, la $\gamma$-butyrolactone, le formiate de méthyle, le formiate d'éthyle, l'acétate d'éthyle, le propionate d'éthyle, le propionate de propyle, le diméthylsulfoxyde, la tétraméthylènesulfone, le méthylsulfonylméthane et le tétrahydrofuranne.

**8.** Batterie secondaire au lithium comprenant l'électrolyte selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2015288033 A1
- CN 105206875 A